# FASCICULE DE BREVET EUROPEEN

(11) **EP 1 159 542 B1**
(45) Date de publication et mention de la délivrance du brevet: **07.01.2004**
(21) Numéro de dépôt: 00907727.2
(22) Date de dépôt: 25.02.2000
(51) Int. Cl.: F16C 33/78

(54) **ENSEMBLE PREASSEMBLE FORMANT JOINT A ETANCHEITE MAGNETIQUE ET PALIER INCORPORANT UN TEL ENSEMBLE**
VORMONTIERTE, MAGNETISCHE DICHTUNGSANORDNUNG UND LAGER MIT SOLCH EINER DICHTUNG
PRE-MOUNTED ASSEMBLY FORMING A MAGNETIC SEALING JOINT AND BEARING INCORPORATING SAME

(30) Priorité: 10.03.1999 FR 9902965
(43) Date de publication de la demande: 05.12.2001
(73) Titulaire: SNR ROULEMENTS, F-74010 Annecy (FR)
(72) Inventeur: NANTUA, René, F-74330 Sillingy (FR); SAND, Jean-Pierre, F-74320 Sevrier (FR); LIATARD, Bernard, F-74540 Gruffy (FR)
(74) Mandataire: Geismar, Thierry
(86) Numéro de dépôt international: PCT/FR2000/000474
(87) Numéro de publication internationale: WO 2000/053942

(56) Documents cités:
- FR-A- 2 755 193
- US-A- 3 700 248
- US-A- 4 043 619
- US-A- 4 795 168

## Description

L'invention se rapporte au domaine technique de l'étanchéité des roulements ou paliers.

On connaît déjà dans l'art antérieur de nombreuses conceptions de moyens d'étanchéité pour paliers ou roulements, la perte d'étanchéité constituant l'essentiel des causes de défaillance des roulements, en particulier dans le secteur automobile, et plus particulièrement les roulements de roue.

On peut se référer, par exemple, aux documents suivants :
- demandes de brevet européen N° 789 152, 785 368, 046 321, 051 170, 053 334, 082 552, 088 517, 098 628, 129 270, 140 421, 153 768, 167 700, 168 092, 208 881, 235 366, 260 441, 286 151, 337 321, 458 122, 458 123, 464 379, 523 614, 541 036, 577 912, 600 659, 608 672, 644 345, 649 762, 656 267, 661 472, 661 473, 676 554, 708 263, 713 021, 748 968, 754 873, 795 702, 807 775, 301 731, 303 359, 304 160, 508 013, 519 654, 737 821, 833 089 ;
- demande de brevet européen issue de la demanderesse N° 378 939.

L'invention se rapporte plus particulièrement mais non exclusivement aux joints d'étanchéité pour roulements pourvus de moyens tournant générateurs d'impulsions tels que codeur magnétique incorporé.

Pour ce type de joint d'étanchéité on peut se reporter, par exemple, aux demandes de brevet européen suivantes issues de la demanderesse : N° 371 836, 376 771, 378 939, 495 323, 607 719, 652 438, 671 628, 725 281.

Un ensemble selon le préambule de la revendication 1 est connu du document FR 2 755 193 A.

La grande variété des conceptions proposées dans l'art antérieur pour de tels dispositifs d'étanchéité illustre le fait que plusieurs problèmes techniques posés par le maintien à long terme d'une bonne étanchéité n'ont pas trouvé à ce jour de solution unique satisfaisante.

L'emploi d'élastomère enrobant une armature de renforcement et venant interférer contre des faces de frottement a permis d'améliorer la maîtrise des conditions de contact des lèvres d'étanchéité dynamique de tels joints.

Du document US 4 043 619 A sont connus des disques d'étanchéité comportant deux anneaux ferrormagnétiques servant à fixer les disques à l'armature fixe.

En dépit de ces progrès importants, il subsiste un besoin d'un dispositif d'étanchéité dont les moyens d'étanchéité dynamique présentent de meilleures conditions de contact avec leur surface de frottement.

L'invention vise à répondre à une telle demande.

A cette fin, l'invention se rapporte, selon un premier aspect, à un ensemble préassemblé incorporant des moyens d'étanchéité et un disque magnétique , destiné à être monté entre un support fixe et un support tournant faisant partie d'un roulement ou d'un palier, ledit ensemble comprenant :
- une armature fixe destinée à être solidarisée au support fixe ;
- une armature mobile portant le disque magnétique et destinée à être solidarisée au support tournant,
- un joint d'étanchéité surmoulé sur au moins une partie de la face latérale externe de l'armature fixe, ce joint d'étanchéité comprenant :
   - au moins un moyen d'étanchéité dynamique en frottement contre le support tournant ou contre l'armature mobile ;
   - ledit ensemble étant caractérisé en ce que le joint d'étanchéité comprend en outre un anneau ferromagnétique, de sorte que sous l'action du champ magnétique développé par le disque magnétique, l'anneau ferromagnétique est attiré vers le disque magnétique, un effort de compression des moyens d'étanchéité dynamiques contre leurs faces d'appui en résultant.

L'ensemble préassemblé présente les caractères complémentaires suivants, dans certains modes de réalisation, ces caractères étant pris seuls ou en combinaison :
- le joint comprend en outre au moins un talon d'étanchéité statique en contact contre la paroi latérale supérieure du support fixe ;
- l'armature mobile comprend une première paroi et une troisième paroi décalée axialement vers l'extérieur par rapport à la première paroi, la première paroi étant reliée par un congé de raccordement à une première portée cylindrique de l'armature mobile sur le support mobile, la troisième paroi portant le disque magnétique ;
- la première paroi annulaire et une deuxième paroi annulaire de l'armature mobile forment une gorge annulaire ;
- ladite gorge annulaire présente en section axiale, un profil en U ou pseudo U, en V ou pseudo V ;
- la face latérale externe de ladite gorge comprend des surfaces d'appui pour au moins une lèvre d'étanchéité dynamique ;
- le disque est élaboré en un matériau choisi parmi le groupe comprenant les élastomères chargés de ferrite de strontium ou de ferrite de baryum et leurs équivalents ;
- une lèvre d'étanchéité dynamique vient en appui contre la face latérale externe du support tournant ;
- une lèvre d'étanchéité articulée autour d'une charnière vient en appui dans ladite gorge contre des faces de l'armature mobile ;
- le disque est unipolaire ou le disque est un codeur multipolaire ;
- l'ensemble comprend un aimant uni ou multipolaire en plus d'un codeur multipolaire ;
- ledit aimant uni ou multipolaire est placé dans une gorge de l'armature mobile et exerce une attraction sur l'anneau ferromagnétique ;
- le joint d'étanchéité est en appui, sur une bande annulaire de dimension radiale rₐ, contre l'armature mobile, l'étanchéité étant réalisée par le contact de glissement entre la surface externe de l'armature mobile et la surface interne du joint ;
- l'armature mobile présente une partie extrême définissant une gorge annulaire dans laquelle un aimant est placé ;
- l'armature fixe comporte un joint d'étanchéité à une seule lèvre d'étanchéité dynamique ;
- la lèvre d'étanchéité dynamique est plaquée avec interférence contre la paroi externe du support mobile ;
- la lèvre d'étanchéité dynamique est plaquée avec interférence contre une face latérale annulaire externe de l'armature mobile.

L'invention se rapporte, selon un deuxième aspect à un roulement ou palier étanche comportant une bague ou support fixe et une bague ou support tournant et, monté sur eux, un ensemble préassemblé formant joint d'étanchéité tel que présenté précédemment.

La surface latérale externe de l'armature fixe est décalée vers l'intérieur par rapport au plan P tangent aux faces latérales externes des bagues ou supports de palier.

Dans une autre réalisation la surface externe de l'armature fixe est sensiblement contenue dans le plan P tangent aux faces latérales externes des bagues ou supports de palier.

D'autres objets et avantages de l'invention apparaîtront au cours de la description suivante de modes de réalisation, description qui va être effectuée en se référant aux dessins annexés dans lesquels :
- la figure 1 est une vue en coupe axiale d'un joint d'étanchéité à disque ou codeur magnétique incorporé pour roulement ou palier ;
- la figure 2 est une vue analogue à la figure 1, selon un autre mode de réalisation ;
- les figures 3 et 4 sont des vues analogues aux figures 1 et 2, selon d'autres modes de réalisation ;
- la figure 5 est un diagramme représentant l'évolution de la force d'attraction du joint à étanchéité magnétique tel que représenté en figure 2, en fonction de l'entrefer ;
- la figure 6 est un diagramme analogue à la figure 5 en coordonnées semi logarithmique.

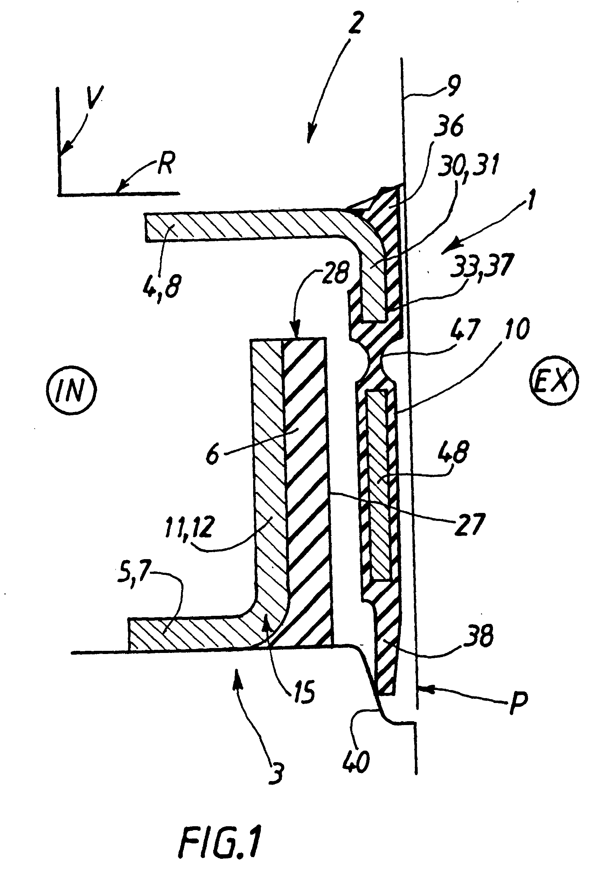

On se rapporte tout d'abord à la figure 1, qui est une vue de détail d'un ensemble préassemblé 1 formant joint d'étanchéité à disque magnétique ou codeur magnétique incorporé destiné à être monté entre un support fixe 2 et un support tournant 3 faisant partie d'un roulement ou d'un palier.

Ainsi, lorsque l'ensemble préassemblé 1 est monté dans un roulement, le support fixe 2 est la bague extérieure du roulement, et le support tournant 3 est la bague intérieure du roulement, dans la configuration représentée.

Une armature fixe 4 est solidarisée au support fixe 2. De même, une armature mobile 5 comportant un disque portant un aimant unipolaire ou un codeur magnétique multipolaire 6 est solidarisée au support tournant 3.

L'homme du métier comprendra qu'en intervertissant les armatures fixe 4 et mobile 5, l'ensemble préassemblé 1 peut être intégré dans un roulement comprenant une bague extérieure mobile et une bague intérieure fixe.

Dans le mode de réalisation représenté en figure 1, l'armature mobile 5 est emmanchée frettée sur le support tournant 3, via une première portée cylindrique 7, de sorte que les deux pièces soient solidaires.

De même, l'armature fixe 4 est emmanchée frettée sur le support fixe 2, via une seconde portée cylindrique 8.

Dans d'autres modes de réalisation, non représentés, l'armature fixe et/ou l'armature mobile sont clipées et/ou collées sur le support fixe et le support mobile respectivement.

Dans d'autres modes de réalisation, non représentés, l'armature fixe est montée frettée sur l'extérieur du support fixe.

Dans la suite de cette description, les termes "interne", "intérieur", "externe", "extérieur" seront utilisés en rapport aux indices in et ex placés sur la figure 1.

Ainsi, lorsque l'ensemble préassemblé est destiné à être intégré dans un roulement, l'indice in placé à gauche de l'armature mobile 5 sur la figure 1 correspond à l'intérieur du roulement, contenant les corps roulant, l'indice ex placé à droite de l'armature fixe 4 sur la figure 1 correspondant à l'espace situé au-delà du plan P tangent à la face latérale extérieure 9 du support fixe 2.

La direction R est parallèle à l'axe de rotation du support tournant 3.

Dans la suite du texte, par soucis de simplification, cette direction R sera prise horizontale et les dimensions mesurées selon cette direction R seront dites "axiales".

La direction V, perpendiculaire à la direction R, définit avec la direction R le plan de coupe de la figure 1.

Cette direction V est donc prise verticale et les dimensions mesurées selon cette direction V seront dites "radiales".

Dans le mode de réalisation représenté en figure 1, la face latérale externe 10 de l'armature fixe 4 est décalée et en retrait vers l'intérieur par rapport au plan P défini ci-dessus.

Dans d'autres modes de réalisation, non représentés, la face latérale externe de l'armature fixe vient tangenter ledit plan P sans dépasser vers l'extérieur par rapport à ce plan.

Dans d'autres modes encore de réalisation, non représentés, la face latérale externe de l'armature fixe saille légèrement vers l'extérieur, au-delà dudit plan P.

L'armature mobile 5 comporte une pièce basale 11 comprenant, en partant du support tournant 3 et en se déplaçant radialement vers le support fixe 2 :
- la première portée cylindrique 7, annulaire et axiale ;
- une paroi annulaire radiale 12.

Un congé de raccordement 15 relie la première portée cylindrique 7 et la paroi annulaire 12.

Un codeur magnétique multipolaire 6 ou un disque aimant unipolaire est surmoulé sur la pièce basale 11 de l'armature mobile 5.

Ce disque ou ce codeur peuvent être élaborés, par exemple, en élastomère chargé de ferrite tel que ferrite de strontium, ferrite de baryum, ces exemples n'étant pas limitatifs.

Dans le mode de réalisation représenté en figure 1, ce disque ou codeur 6 recouvre toute la dimension radiale de la paroi 12.

Dans d'autres modes de réalisation, non représentés, le disque ou codeur 6 ne recouvre qu'une partie de cette paroi 12.

La face latérale externe 27 du disque ou codeur 6 est sensiblement verticale et distante de l'armature fixe 4 de protection d'une valeur supérieure aux jeux fonctionnels, de sorte à éviter tout contact entre le disque ou codeur 6 et l'armature fixe 4.

La face annulaire 28 placée en regard de la portée cylindrique 8 de l'armature fixe est de même écartée de cette portée 8 de sorte à éviter tout contact entre le disque 6 et cette portée 8 lors de la rotation du disque 6.

L'armature fixe 4 comporte une pièce interne 30 comprenant, en partant du support fixe 2 et en se déplaçant radialement vers le support tournant 3 :
- la seconde portée cylindrique 8 ;
- une paroi annulaire radiale déflecteur, support d'étanchéité 31.

La pièce interne 30 et le joint d'étanchéité 33 surmoulé sur cette pièce interne 30 sont amagnétiques et ne perturbent en rien les lignes de champ issues du disque 6.

De sorte que lorsque ce disque 6 est un codeur magnétique multipolaire, un capteur peut lire les impulsions émises par le codeur 6, au travers de l'armature fixe 4.

Le joint d'étanchéité 33 comporte, en partant du support fixe 2 et en se déplaçant radialement vers le support tournant 3 :
- un talon d'étanchéité statique 36 ;
- une bande annulaire de recouvrement 37 de la paroi 31 ;
- une lèvre d'étanchéité dynamique 38.

Dans une variante de réalisation, non représentée, le joint est dépourvu de talon d'étanchéité.

Cette lèvre d'étanchéité 38 est plaquée, avec interférence, contre la face latérale externe 40 du support tournant 3.

Le joint d'étanchéité présente une section amincie 47 et un anneau circulaire ferromagnétique 48.

L'anneau circulaire ferromagnétique peut être enrobé dans le matériau du joint d'étanchéité 33 ou comporter au moins une partie affleurante en face interne dudit joint 33. L'anneau 48 peut être continu ou non.

Sous l'action du champ magnétique développé par le disque 6, l'anneau ferromagnétique 48 est attiré vers le disque 6, la section amincie 47 du joint formant articulation.

Il en résulte un effort de plaquage de la lèvre d'étanchéité dynamique 38 contre la paroi 40.

Lorsque le disque 6 est un codeur magnétique multipolaire, l'anneau ferromagnétique est de dimensions et de nature telles que les lignes de champ ne sont pas perturbées.

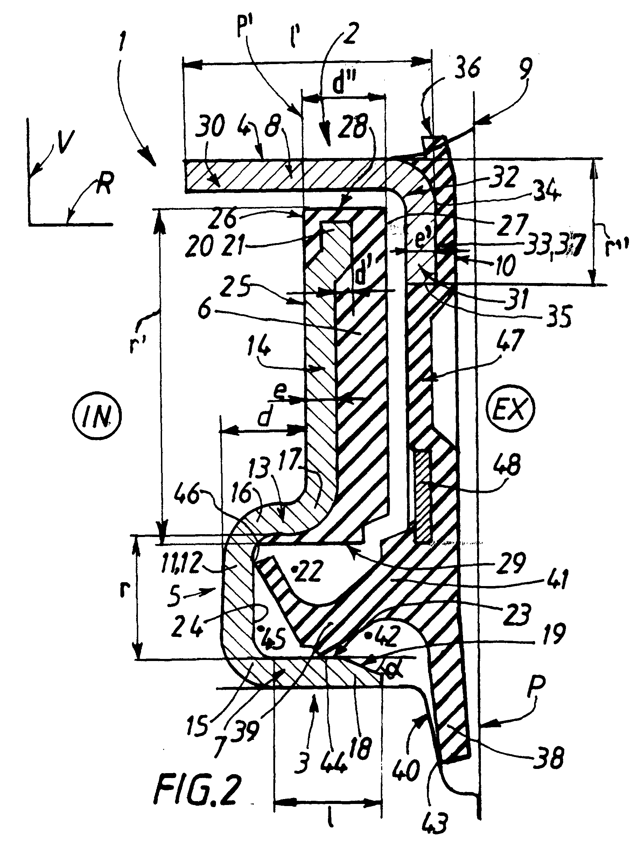

On se rapporte maintenant à la figure 2.

Les éléments communs aux différents modes de réalisation sont référencés de la même manière.

On décrit maintenant plus complètement l'armature mobile 5 telle que présente dans le mode de réalisation de la figure 2.

L'armature mobile 5 comporte une pièce basale annulaire 11 comprenant, en partant du support tournant 3 et en se déplaçant radialement vers le support fixe 2, dans le mode de réalisation représenté :
- la première portée cylindrique 7, annulaire et axiale ;
- une première paroi annulaire 12, radiale ;
- une deuxième paroi annulaire 13, axiale ;
- une troisième paroi annulaire 14, radiale, décalée d'une distance axiale d par rapport à la première paroi annulaire 12.

La première paroi annulaire 12 et la troisième paroi annulaire 14 sont sensiblement parallèles entre elles et parallèles au plan P, dans le mode de réalisation représenté.

La première portée cylindrique 7 et la seconde paroi annulaire 13 sont sensiblement concentriques et leurs traces dans le plan de la figure 1 sont sensiblement parallèles à la direction R.

Un premier congé de raccordement 15 relie la première portée cylindrique 7 et la première paroi annulaire 12.

Un deuxième congé de raccordement 16 relie la première paroi annulaire 12, radiale à la deuxième paroi annulaire 13, axiale.

Un troisième congé de raccordement 17 relie la deuxième paroi annulaire 13, axiale à la troisième paroi annulaire 14, radiale.

La première partie extrême 18 de la pièce basale 11 comporte un biseau 19 formant tronc de cône dont la trace, dans le plan de la figure 1, est inclinée d'un angle α compris entre 5 et 30° environ par rapport à l'horizontale.

La seconde partie extrême 20 de la pièce basale 11 comporte un décrochement 21 vers l'extérieur formant une quatrième paroi annulaire radiale, décalée vers l'extérieur d'une distance axiale d' par rapport à la troisième paroi annulaire 14.

Dans le mode de réalisation représenté, la distance d' est de l'ordre de la moitié de l'épaisseur e définie auparavant. A l'exception de la première partie extrême 18 biseautée, la pièce basale annulaire 11 de l'armature mobile 5 présente une épaisseur e sensiblement constante.

La première portée cylindrique 7, la première paroi annulaire 12 et la deuxième paroi annulaire 13 forment, avec les congés de raccordement 15, 16, une gorge annulaire 22 à ouverture tournée vers l'extérieur.

Dans le mode de réalisation représenté en figure 2, cette gorge annulaire 22 présente, dans le plan de coupe axiale considéré, un profil en U de dimension axiale maximum sensiblement identique à sa dimension radiale maximum.

En d'autres termes, dans le mode de réalisation représenté, la longueur axiale l de la portée cylindrique 7 est sensiblement égale à la dimension radiale r de la première paroi annulaire 12.

La face latérale externe de la gorge annulaire 22 comprend une surface annulaire axiale 23 et une surface annulaire radiale 24 qui forment, ainsi qu'il apparaîtra plus complètement par la suite, surfaces d'appui pour des moyens d'étanchéité dynamique disposés sur l'armature fixe 4 de l'ensemble 1.

La pièce basale 11 de l'armature mobile 5 peut être réalisée en un matériau ferromagnétique tel qu'aciers inoxydables X4Cr17, par exemple.

Un aimant unipolaire ou un disque codeur magnétique multipolaire 6 est surmoulé sur la pièce basale 11 de l'armature mobile 5.

Ce disque uni ou multipolaire peut être élaboré, par exemple, en élastomère chargé en ferrite tel que ferrite de strontium, ferrite de baryum, ces exemples n'étant pas limitatifs.

D'autres charges aptes à procurer des densités de flux magnétiques élevées par unité de volume peuvent a priori être envisagées, par exemple des alliages magnétiques néodyme-fer-bore ou samarium-cobalt, toutefois les ferrites sont beaucoup moins onéreux et beaucoup plus faciles à magnétiser et sont donc préférés le plus souvent.

Le disque 6 recouvre tout une surface latérale des deuxième 13, troisième 14 et quatrième paroi latérales de la pièce basale 11 et enrobe le décrochement 21 formé sur la seconde partie extrême 20 de cette pièce basale 11.

La surface latérale interne annulaire 25 de la troisième paroi annulaire 14 est sensiblement placée dans la continuité de la surface latérale interne annulaire 26 du disque 6, dans un plan transversal P' écarté d'une distance axiale d" de la face latérale externe 27 du disque 6.

De sorte que le disque 6 saille en direction de l'extérieur, sur la troisième paroi annulaire 14, d'une dimension axiale de l'ordre de deux fois l'épaisseur e de la pièce basale 11.

La face latérale externe 27 du disque 6 est sensiblement verticale et distante de l'armature fixe 4 de protection du disque 6 d'une valeur supérieure aux jeux fonctionnels de sorte à éviter tout contact entre le disque 6 et l'armature fixe 4.

La face annulaire 28 placée en regard de la portée cylindrique 8 de l'armature fixe 4 est, de même, écartée de cette portée 8 de sorte à éviter tout contact entre le disque 6 et cette portée 8 lors de la rotation du disque 6.

Dans le mode de réalisation représenté, le disque 6 est limité radialement par la face annulaire 28 et une face annulaire 29 sensiblement concentrique à la face 28 et à la surface annulaire axiale 23 de la première portée 7.

La face annulaire 29 est distante de la surface annulaire axiale 23 de la valeur r définie auparavant.

La dimension radiale maximum r' du disque 6, représentée par la distance radiale séparant les faces annulaires 28, 29 est de l'ordre de trois fois la valeur r définie auparavant, dans le mode de réalisation considéré.

On décrit maintenant plus complètement l'armature fixe.

L'armature fixe comporte une pièce interne 30 comprenant en partant du support fixe 2 et se déplaçant radialement vers le support tournant 3 :
- la seconde portée cylindrique 8 ;
- une paroi annulaire radiale déflecteur support d'étanchéité 31.

Un congé de raccordement relie la seconde portée cylindrique 8 axiale et la paroi support d'étanchéité 31.

La pièce interne 30 de l'armature fixe 4 présente une épaisseur e' sensiblement constante.

La pièce interne 30 présente, dans les coupes axiales représentées en figure 1 ou 2, un profil en L de dimension axiale maximum supérieure à sa dimension radiale maximum.

En d'autres termes, dans les modes de réalisation représenté en figures 1 et 2, la longueur axiale l' de la seconde portée cylindrique 8 est supérieure à la dimension radiale r" de la paroi support d'étanchéité.

Cette dimension radiale r" de la paroi 31 est inférieure à la dimension radiale maximale r' du disque 6.

La pièce interne 30 de l'armature fixe peut être pleine ou non et est réalisée en un matériau amagnétique tel que polymère ou certains aciers inoxydables, par exemple.

De sorte que la paroi support d'étanchéité 31 est parfaitement transparente magnétiquement et ne perturbe en rien les lignes de champ issues du disque 6.

De sorte que lorsque le disque 6 est un codeur, un capteur peut lire les impulsions émises par le codeur.

La paroi support d'étanchéité 31 est sensiblement parallèle à la face latérale externe 27 du disque et sensiblement parallèle aux plans P et P' définis auparavant. Un joint d'étanchéité 33 surmoulé vient recouvrir la face latérale externe 34 de la paroi 31 et enrober la partie extrême 35 de cette paroi.

Ce joint d'étanchéité 33 comporte, en partant du support fixe 2 et en se déplaçant radialement vers le support tournant 3 :
- un talon d'étanchéité statique 36 ;
- une bande annulaire de recouvrement 37 de la paroi 31 ;
- deux lèvres d'étanchéité dynamique 38, 39.

Dans d'autres modes de réalisation, non représentés, ce joint d'étanchéité comporte, en partant du support fixe 2 et en se déplaçant radialement vers le support tournant 3, uniquement deux lèvres d'étanchéité dynamique.

La lèvre d'étanchéité 38, sensiblement placée dans le prolongement de la paroi 31 et légèrement inclinée par rapport à celle-ci, vient en appui contre la face latérale externe 40 du support tournant 3.

La lèvre d'étanchéité 39 articulée autour d'une charnière 41 vient en appui avec interférence dans la gorge 22 contre les faces 23, 24 de la pièce basale de l'armature mobile 5.

Ainsi, la lèvre d'étanchéité dynamique 39 est précontrainte dans le sens vertical, dans un mode de mise en oeuvre.

La géométrie des lèvres d'étanchéité dynamique 38, 39 font que l'espace séparant la face externe 27 du disque 6 et l'armature fixe 4 est séparée du milieu extérieur ex par deux compartiments :
- un premier compartiment 42 limité par le contact 43 entre la lèvre 38 et le support tournant 3 d'une part et le contact 44 entre la lèvre 39 et la surface 23 de la portée 7 d'autre part ;
- un deuxième compartiment 45 limité par le contact 44 défini ci-dessus d'une part et le contact 46 entre la lèvre 39 et la surface 24 de la paroi 12 d'autre part.

Ces deux compartiments garnis de graisse peuvent jouer le rôle de sas limitant la pénétration de polluants vers l'intérieur du roulement.

Le joint d'étanchéité 33 peut être plein ou non et est élaboré en élastomère tel que VITON, acrylonitrile ou tout autre matériau équivalent, choisi en fonction des applications.

Le joint d'étanchéité présente une section amincie 47 et un anneau circulaire ferromagnétique 48.

L'anneau ferromagnétique peut être enrobé dans le matériau du joint d'étanchéité ou comporter au moins une partie en affleurement en face interne dudit joint.

Dans le mode de réalisation représenté, en coupe axiale, l'anneau circulaire ferromagnétique est de section rectangulaire.

Dans d'autres modes de réalisation, non représentés, la section dans le plan axial de la figure 1 ou 2 de l'anneau circulaire 48 est ovale, circulaire, polygonale ou autre.

L'anneau circulaire ferromagnétique 48 peut être continu ou non.

Son épaisseur axiale peut être constante, quelque soit le plan de coupe considéré ou au contraire, varier, ceci pour tenir compte par exemple des chargements dyssymétriques du roulement ou palier dans lequel le joint est intégré.

L'anneau circulaire ferromagnétique 48 est complètement enrobé dans le joint d'étanchéité, dans le mode de réalisation représenté.

Lorsque le disque 6 est un codeur, l'anneau ferromagnétique est de dimensions telles qu'il ne perturbe pas sensiblement les lignes de champ.

Sous l'action du champ magnétique développé par le disque 6, l'anneau ferromagnétique 48 est attiré vers le disque 6, la section amincie 47 du joint formant articulation.

Un effort de compression des lèvres d'étanchéité dynamiques 38, 39 sur les contacts 43 et 46 définis auparavant résulte de cette attraction de l'anneau ferromagnétique 48 par le disque 6.

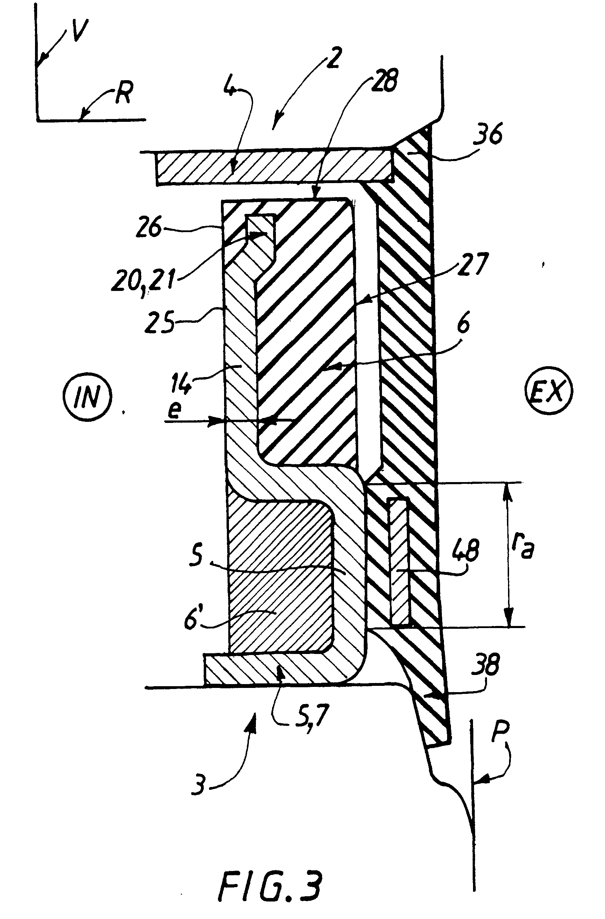

L'on se rapporte maintenant à la figure 3.

L'armature mobile 5 présente une partie extrême radiale supérieure analogue à celle du mode de réalisation de la figure 2, et ne sera donc pas décrite à nouveau.

En revanche, sa partie extrême radiale inférieure présente une forme en U ouvert vers l'intérieur, définissant une gorge annulaire dans laquelle un aimant uni ou multipolaire 6' est placé.

L'armature fixe 4 comporte un joint d'étanchéité à une seule lèvre d'étanchéité dynamique 38 plaquée avec interférence contre la paroi externe 40 du support mobile 3.

Le joint d'étanchéité est en appui, sur une bande annulaire de dimension radiale rₐ contre l'armature mobile 5. L'étanchéité est réalisée par le contact de glissement entre la surface externe de l'armature mobile 5 et la surface interne du joint.
Dans une autre réalisation, la pièce 48 est affleurante et un contact existe entre ladite pièce 48 et la surface métallique de l'armature mobile 5.

L'aimant uni ou multipolaire 6' exerce une attraction sur la pièce 48 ferromagnétique placée en regard, ladite pièce 48 étant noyée dans le joint d'étanchéité.

De sorte qu'un effort permanent assure le contact entre la surface extérieure de l'armature mobile 5 et la face interne du joint.

Tout comme dans les modes de réalisation des figures 1 et 2, le joint d'étanchéité peut être réalisé, en dehors de la pièce 48, en matériau amagnétique.

Un capteur placé en regard du codeur 6 pourra donc lire les impulsions émises par le codeur 6 au travers du joint d'étanchéité.

L'ensemble préassemblé 1 formant joint d'étanchéité à deux disques magnétiques incorporés, tel que représenté en figure 3, peut être monté entre un support fixe 2 et un support tournant 3 faisant partie d'un roulement ou d'un palier destiné à une roue motrice de véhicule automobile.

Le support mobile ferromagnétique peut être réalisé en acier inoxydable de sorte à laisser passer le champ.

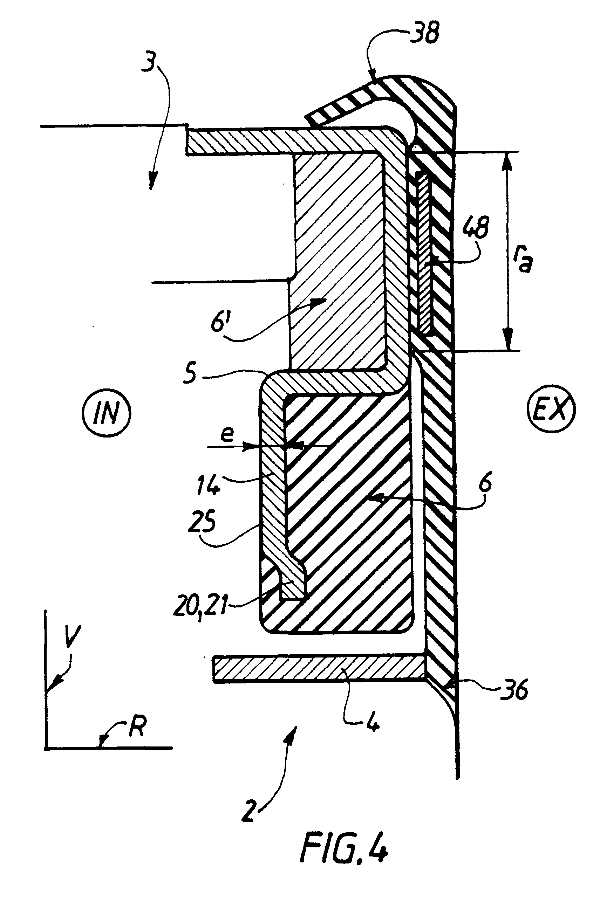

Le mode de réalisation de la figure 4 est du même type que celui de la figure 3.

L'armature mobile 5 présente une première partie extrême radiale analogue à la partie extrême supérieure des armatures mobiles des modes de réalisations des figures 2 et 3 et ne sera donc pas décrite à nouveau.

La seconde partie extrême radiale présente une forme en U ouvert vers l'intérieur définissant une gorge annulaire dans laquelle un aimant uni ou multipolaire 6' est placé, tout comme dans le mode de réalisation de la figure 3.

De même, l'armature fixe 4 comporte un joint d'étanchéité à une seule lèvre d'étanchéité dynamique 38.

Cette lèvre d'étanchéité 38 est plaquée avec interférence contre une face latérale annulaire externe de l'armature mobile 5.

Tout comme dans le mode de réalisation de la figure 3, le joint d'étanchéité est en appui sur une bande annulaire de dimension radiale rₐ contre l'armature mobile 5. L'étanchéité est réalisée par le contact de glissement entre la surface externe de l'armature mobile 5 et la surface interne du joint.

L'aimant uni ou multipolaire 6' exerce une attraction sur la pièce 48 ferromagnétique noyée dans le joint d'étanchéité, cette pièce 48 étant en regard de l'aimant uni ou multipolaire 6'.

Tout comme dans les modes de réalisation précédents, le joint d'étanchéité peut être, à l'exception de la pièce 48, réalisé en matériau amagnétique.

Un capteur tel qu'une magnétorésistance ou sonde de Hall sera donc en mesure de lire les impulsions émises par le codeur au travers du joint d'étanchéité.

L'ensemble préassemblé 1 représenté en figure 4, formant joint d'étanchéité à deux disques magnétiques incorporés destinés à être montés entre un support fixe 2 et un support tournant 3 est plus particulièrement adapté à faire partie d'un roulement ou d'un palier d'une roue non motrice d'un véhicule automobile.

Dans les modes de réalisation considérés ci-dessus et représentés en figures 1 à 4, lorsque le disque 6 est un moyen tournant générateur d'impulsions, la mise en place d'un capteur de type magnétorésistance ou sonde à effet Hall peut être effectuée à une valeur d'entrefer élevée, y compris pour des roulements de faible diamètre, ce capteur étant dissocié du roulement et ne modifiant pas sa géométrie, le roulement étant pourvu de moyens de protection du codeur de sorte que les risques de dépôt de particules ferromagnétiques telles que des copeaux sur la protection du codeur sont faibles, ce dépôt éventuel ne perturbant pas le signal issu des capteurs.

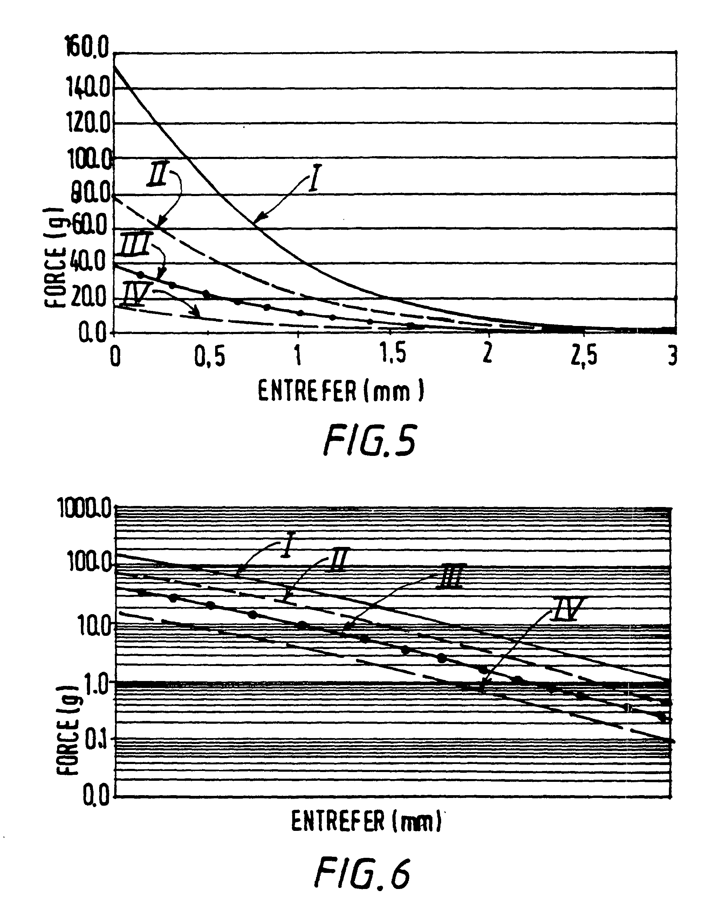

Les figures 5 et 6 illustrent les variations de la force d'adhérence des lèvres 38, 39 en fonction de l'entrefer, pour différentes valeurs de rapport entre la surface de l'anneau ferromagnétique et la surface du disque 6, pour une géométrie telle que représentée en figure 2.

La courbe I des figures 5 et 6 correspond à une référence, la surface totale de l'anneau ferromagnétique étant égale à la surface S₀ du codeur 6.

Les courbes II, III et IV des figures 5 et 6 correspondent respectivement à des rapports entre la surface de l'anneau ferromagnétique et la surface S₀.du codeur 6 égaux à1/2, 1/4, et 1/10.

Les figures 5 et 6 montrent qu'il est possible d'obtenir une force significative d'attraction, y compris pour des valeurs d'entrefer importantes.

## Revendications

1. Ensemble préassemblé (1) incorporant des moyens d'étanchéité et un disque magnétique (6), destiné à être monté entre un support fixe (2) et un support tournant (3) faisant partie d'un roulement ou d'un palier, ledit ensemble comprenant :
- une armature fixe destinée à être solidarisée au support fixe (2) ;
- une armature mobile (5) portant le disque magnétique (6) et destinée à être solidarisée au support tournant (3) ;
- un joint d'étanchéité (33) surmoulé sur au moins une partie de la face latérale externe de l'armature fixe (4), ce joint d'étanchéité comprenant :
- au moins un moyen d'étanchéité dynamique (38, 39) en frottement contre le support tournant (3) ou contre l'armature mobile (5) ;
ledit ensemble étant **caractérisé en ce que** le joint d'étanchéité (33) comprend en outre un anneau ferromagnétique (48), de sorte que sous l'action du champ magnétique, développé par le disque magnétique (6), l'anneau ferromagnétique (48) est attiré vers le disque magnétique (6), un effort de compression des moyens d'étanchéité dynamiques (38, 39) contre leurs faces d'appui en résultant.

2. Ensemble préassemblé selon la revendication 1, **caractérisé en ce que** le joint comprend en outre au moins un talon d'étanchéité statique (36) en contact contre la paroi latérale supérieure du support fixe (2).

3. Ensemble préassemblé selon la revendication 1 ou 2, **caractérisé en ce que** l'armature mobile (5) comprend une première paroi (12) et une troisième paroi (14) décalée axialement vers l'extérieur par rapport à la première paroi (12), la première paroi étant reliée par un congé de raccordement à une première portée cylindrique (7) de l'armature mobile sur le support mobile (3), la troisième paroi portant le disque magnétique.

4. Ensemble préassemblé selon la revendication 3, **caractérisé en ce que** la première paroi annulaire (12) et une deuxième paroi annulaire (13) de l'armature mobile (5) forment une gorge annulaire (22).

5. Ensemble préassemblé selon la revendication 4, **caractérisé en ce que** la gorge annulaire (22) présente en section axiale, un profil en U ou pseudo U, en V ou pseudo V.

6. Ensemble préassemblé selon la revendication 5, **caractérisé en ce que** la face latérale externe de la gorge (22) comprend des surfaces d'appui (23, 24) pour au moins une lèvre d'étanchéité dynamique (39).

7. Ensemble préassemblé selon l'une quelconque des revendications 1 à 6, **caractérisé en ce que** le disque (6) est élaboré en un matériau choisi parmi le groupe comprenant les élastomères chargés de ferrite de strontium ou de ferrite de baryum et leurs équivalents.

8. Ensemble préassemblé selon la revendication 5 ou 6, **caractérisé en ce qu'**une lèvre d'étanchéité dynamique (38) vient en appui contre la face latérale externe (40) du support tournant (3).

9. Ensemble préassemblé selon la revendication 8, **caractérisé en ce qu'**une lèvre d'étanchéité (39) articulée autour d'une charnière (41) vient en appui dans la gorge (22) contre des faces (23, 24) de l'armature mobile (5).

10. Ensemble préassemblé selon l'une quelconque des revendications 1 à 9, **caractérisé en ce que** le disque (6) est unipolaire.

11. Ensemble préassemblé selon l'une quelconque des revendications 1 à 9, **caractérisé en ce que** le disque (6) est un codeur multipolaire.

12. Ensemble préassemblé selon l'une quelconque des revendications 1 à 11 **caractérisé en ce qu'**il comprend un aimant uni ou multipolaire (6') en plus d'un codeur multipolaire (6).

13. Ensemble preassemblé selon la revendication 12, **caractérisé en ce que** l'aimant uni ou multipolaire (6') est placé dans une gorge de l'armature mobile (5) et exerce une attraction sur l'anneau ferromagnétique (48).

14. Ensemble préassemblé selon l'une quelconque des revendications 1 à 5, 7, 10 à 13, **caractérisé en ce que** le joint d'étanchéité est en appui, sur une bande annulaire de dimension radiale rₐ, contre l'armature mobile (5), l'étanchéité étant réalisée par le contact de glissement entre la surface externe de l'armature mobile (5) et la surface interne du joint.

15. Ensemble préassemblé selon la revendication 14, **caractérisé en ce que** l'armature mobile présente une partie extrême définissant une gorge annulaire dans laquelle un aimant (6') est placé.

16. Ensemble préassemblé selon la revendication 14 ou 15, **caractérisé en ce que** l'armature fixe (4) comporte un joint d'étanchéité à une seule lèvre d'étanchéité dynamique (38).

17. Ensemble préassemblé selon la revendication 16, **caractérisé en ce que** la lèvre d'étanchéité dynamique (38) est plaquée avec interférence contre la paroi externe (40) du support mobile (3).

18. Ensemble préassemblé selon la revendication 16, **caractérisé en ce que** la lèvre d'étanchéité dynamique (38) est plaquée avec interférence contre une face latérale annulaire externe de l'armature mobile (5).

19. Roulement ou palier étanche comportant une bague ou support fixe et une bague ou support tournant et, monté sur eux, un ensemble préassemblé formant joint d'étanchéité selon l'une quelconque des revendications 1 à 18.

20. Roulement ou palier selon la revendication 19, **caractérisé en ce que** la surface latérale externe de l'armature fixe est décalée vers l'intérieur par rapport au plan P tangent aux faces latérales externes des bagues ou supports de palier.

21. Roulement ou palier selon la revendication 20, **caractérisé en ce que** la surface externe de l'armature fixe est sensiblement contenue dans le plan P tangent aux faces latérales externes des bagues ou supports de palier.

## Claims

1. A pre-assembled assembly (1) incorporating sealing means and a magnetic disk (6), intended to be mounted between a fixed support (2) and a rotating support (3) forming part of a bearing or roller bearing, the said assembly comprising:
- a fixed frame intended to be secured to the fixed support (2);
- a movable frame (5) carrying the magnetic disk (6) and intended to be secured to the rotating support (3);
- a seal (33) moulded onto at least part of the external lateral face of the fixed frame (4), this seal comprising:
- at least one dynamic sealing means (38, 39) rubbing against a rotating support (3) or against the movable frame (5);
the said assembly being **characterised in that** the seal (33) also comprises a ferromagnetic ring (48), so that, under the action of the magnetic field developed by the magnetic disk (6), the ferromagnetic ring (48) is attracted towards the magnetic disk (6), a compression force on the dynamic sealing means (38, 39) against their abutment faces resulting therefrom.

2. A pre-assembled assembly according to Claim 1, **characterised in that** the seal also comprises at least one static sealing heel (36) in contact against the top lateral wall of the fixed support (2).

3. A pre-assembled assembly according to Claim 1 or 2, **characterised in that** the movable frame (5) comprises a first wall (12) and a third wall (14) offset axially towards the outside with respect to the first wall (12), the first wall being connected by a connecting shoulder to a first cylindrical surface (7) of the movable frame on the movable support (3), the third wall carrying the magnetic disk.

4. A pre-assembled assembly according to Claim 3, **characterised in that** the first annular wall (12) and a second annular wall (13) of the movable frame (5) form an annular groove (22).

5. A pre-assembled assembly according to Claim 4, **characterised in that** the annular groove (22) has, in axial section, a profile in the shape of a U or pseudo-U or a V or pseudo-V.

6. A pre-assembled assembly according to Claim 5, **characterised in that** the external lateral face of the groove (22) comprises abutment surfaces (23, 24) for at least one dynamic sealing lip (39).

7. A pre-assembled assembly according to any one of Claims 1 to 6, **characterised in that** the disk (6) is produced from a material chosen from amongst the group comprising elastomers with strontium ferrite or barium ferrite or their equivalents as fillers.

8. A pre-assembled assembly according to Claim 5 or 6, **characterised in that** a dynamic sealing lip (38) comes into abutment against the external lateral face (40) of the rotating support (3).

9. A pre-assembled assembly according to Claim 8, **characterised in that** a sealing lip (39) articulated about a hinge (41) comes into abutment in the groove (22) against faces (23, 24) of the movable frame (5).

10. A pre-assembled assembly according to any one of Claims 1 to 9, **characterised in that** the disk (6) is of the single pole type.

11. A pre-assembled assembly according to any one of Claims 1 to 9, **characterised in that** the disk (6) is a multipole coder.

12. A pre-assembled assembly according to any one of Claims 1 to 11, **characterised in that** it comprises a single- or multipole magnet (6') in addition to a multipole coder (6).

13. A pre-assembled assembly according to Claim 12, **characterised in that** the single or multipole magnet (6') is placed in a groove in the movable frame (5) and exerts an attraction on the ferromagnetic ring (48).

14. A pre-assembled assembly according to any one of Claims 1 to 5, 7, 10 to 13, **characterised in that** the seal is in abutment, on an annular band with a radial dimension rₐ, against the movable frame (5), the sealing being produced by the sliding contact between the external surface of the movable frame (5) and the internal surface of the seal.

15. A pre-assembled assembly according to Claim 14,
**characterised in that** the movable frame has an end part defining an annular groove in which a magnet (6') is placed.

16. A pre-assembled assembly according to Claim 14 or 15, **characterised in that** the fixed frame (4) comprises a seal with a single dynamic sealing lip (38).

17. A pre-assembled assembly according to Claim 16, **characterised in that** the dynamic sealing lip (38) is pressed with interference against the external wall (40) of the movable support (3).

18. A pre-assembled assembly according to Claim 16, **characterised in that** the dynamic sealing lip (38) is pressed with interference against an external annular lateral face of the movable frame (5).

19. A sealed bearing or roller bearing comprising a fixed race or support and a rotating race or support and, mounted on them, a pre-assembled assembly forming a seal according to any one of Claims 1 to 18.

20. A bearing or roller bearing according to Claim 19, **characterised in that** the external lateral surface of the fixed frame is offset towards the inside with respect to the plane P tangent to the external lateral faces of the bearing races or supports.

21. A bearing or roller bearing according to Claim 20, **characterised in that** the external surface of the fixed frame is substantially contained in the plane P tangent to the external lateral faces of the bearing races or supports.

## Patentansprüche

1. Abdichtungsmittel und eine magnetische Scheibe (6) beinhaltender, zum Einbau zwischen einem festen Träger (2) und einem zu einem Wälzlager oder einem Lager gehörenden sich drehenden Träger (3) bestimmter vormontierter Aufbau (1), wobei der genannte Aufbau Folgendes umfasst:
- eine zur festen Befestigung mit dem festen Träger (2) bestimmte feste Armierung;
- eine die magnetische Scheibe (6) tragende und zur festen Befestigung am sich drehenden Träger (3) bestimmte mobile Armierung (5);
- einen abgeformten Dichtungsring (33) auf wenigstens einem Teil der externen lateralen Fläche der festen Armierung (4), wobei dieser Dichtungsring Folgendes umfasst:
- wenigstens ein dynamisches Abdichtungsmittel (38, 39) in Reibung gegen den sich drehenden Träger (3) oder gegen die mobile Armierung (5);
wobei der genannte Aufbau **dadurch gekennzeichnet ist, dass** der Dichtungsring (33) darüber hinaus einen ferromagnetischen Ring (48) derart umfasst, dass unter der Wirkung des von der magnetischen Scheibe (6) entwickelten Magnetfeldes der ferromagnetische Ring (48) zur magnetischen Scheibe (6) angezogen wird, woraus sich eine Druckbeanspruchung der dynamischen Abdichtungsmittel (38, 39) gegen ihre Stützseiten ergibt.

2. Vormontierter Aufbau gemäß Anspruch 1, **dadurch gekennzeichnet, dass** die Dichtung darüber hinaus wenigstens einen statischen Abdichtungsabsatz (36) im Kontakt gegen die obere laterale Wand des festen Trägers (2) umfasst.

3. Vormontierter Aufbau gemäß Anspruch 1 oder 2, **dadurch gekennzeichnet, dass** die mobile Armierung (5) eine erste Wand (12) und eine im Verhältnis zur ersten Wand (12) axial nach außen verschobene dritte Wand (14) umfasst, wobei die erste Wand durch eine Anschlussausrundung mit einer ersten zylindrischen Länge (7) der mobilen Armierung auf dem mobilen Träger (3) verbunden ist, wobei die dritte Wand die magnetische Scheibe trägt.

4. Vormontierter Aufbau gemäß Anspruch 3, **dadurch gekennzeichnet, dass** die erste ringförmige Wand (12) und eine zweite ringförmige Wand (13) der mobilen Armierung (5) eine ringförmige Auskehlung (22) bilden.

5. Vormontierter Aufbau gemäß Anspruch 4, **dadurch gekennzeichnet, dass** die ringförmige Auskehlung (22) im Axialquerschnitt ein Profil in U-Form oder in Pseudo-U-Form, in V-Form oder in Pseudo-V-Form aufweist.

6. Vormontierter Aufbau gemäß Anspruch 5, **dadurch gekennzeichnet, dass** die externe laterale Seite der Auskehlung (22) Stützflächen (23, 24) für wenigstens eine dynamische Abdichtungslippe (39) umfasst.

7. Vormontierter Aufbau gemäß Anspruch 1 bis 6, **dadurch gekennzeichnet, dass** die Scheibe (6) aus einem aus der mit Strontiumferrit oder Bariumferrit und ihren Äquivalenten angereichertem Elastomore umfassenden Gruppe ausgewählten Material gearbeitet ist.

8. Vormontierter Aufbau gemäß Anspruch 5 oder 6, **dadurch gekennzeichnet, dass** eine dynamische Abdichtungslippe (38) gegen die externe laterale Seite (40) des sich drehenden Trägers (3) zum Aufstützen kommt.

9. Vormontierter Aufbau gemäß Anspruch 8, **dadurch gekennzeichnet, dass** eine um ein Scharnier (41) artikulierte Abdichtungslippe (39) in der Auskehlung (22) gegen die Seiten (23, 24) der mobilen Armierung (5) zum Aufstützen kommt.

10. Vormontierter Aufbau gemäß Anspruch 1 bis 9, **dadurch gekennzeichnet, dass** die Scheibe (6) unipolar ist.

11. Vormontierter Aufbau gemäß Anspruch 1 bis 9, **dadurch gekennzeichnet, dass** die Scheibe (6) ein multipolarer Kodierer ist.

12. Vormontierter Aufbau gemäß Anspruch 1 bis 11, **dadurch gekennzeichnet, dass** er einen uni- oder mulipolaren Magneten (6') zusätzlich zu einem multipolaren Kodierer (6) umfasst.

13. Vormontierter Aufbau gemäß Anspruch 12, **dadurch gekennzeichnet, dass** der uni- oder multipolare Magnet (6') in einer Auskehlung der mobilen Armierung (5) eingesetzt ist und eine Anziehungskraft auf den ferromagnetischen Ring (48) ausübt.

14. Vormontierter Aufbau gemäß Anspruch 1 bis 5, 7, 10 bis 13, **dadurch gekennzeichnet, dass** der Dichtungsring auf einem ringförmigen Band der radialen Abmessung rₐ₁ gegen die mobile Armierung (5) zum Aufstützen kommt, wobei die Abdichtung durch den Gleitkontakt zwischen der äußeren Fläche der mobilen Armierung (5) und der internen Fläche der Dichtung realisiert wird.

15. Vormontierter Aufbau gemäß Anspruch 14, **dadurch gekennzeichnet, dass** die mobile Armierung einen externen Teil aufweist, der eine ringförmige Auskehlung definiert, in der ein Magnet (6') eingesetzt ist.

16. Vormontierter Aufbau gemäß Anspruch 14 oder 15, **dadurch gekennzeichnet, dass** die feste Armierung (4) einen Dichtungsring mit einer einzigen dynamischen Abdichtungslippe (38) umfasst.

17. Vormontierter Aufbau gemäß Anspruch 16, **dadurch gekennzeichnet, dass** die dynamische Abdichtungslippe (38) mit Interferenz gegen die äußere Wand (40) des mobilen Trägers (3) angedrückt ist.

18. Vormontierter Aufbau gemäß Anspruch 16, **dadurch gekennzeichnet, dass** die dynamische Abdichtungslippe (38) mit Interferenz gegen eine ringförmige laterale externe Seite der mobilen Armierung (5) angedrückt ist.

19. Abgedichtetes Wälzlager oder Lager mit einem Ring oder festen Träger und einem Ring oder sich drehenden Träger und einem darauf montierten einen Dichtungsring bildenden vormontiertem Aufbau gemäß Anspruch 1 bis 18.

20. Wälzlager oder Lager gemäß Anspruch 19, **dadurch gekennzeichnet, dass** die externe laterale Fläche der festen Armierung im Verhältnis zu den externen lateralen Seiten der Ringe oder Lagerträger anliegenden Ebene P nach innen verschoben ist.

21. Wälzlager oder Lager gemäß Anspruch 20, **dadurch gekennzeichnet, dass** die externe Fläche der festen Armierung deutlich in der den externen lateralen Seiten der Ringe oder Lagerträger anliegenden Ebene P enthalten ist.
